# EUROPÄISCHE PATENTSCHRIFT

(11) **EP 3 795 937 B1**
(45) Veröffentlichungstag und Bekanntmachung des Hinweises auf die Patenterteilung: **22.12.2021**
(21) Anmeldenummer: 20196936.7
(22) Anmeldetag: 18.09.2020
(51) Int. Cl.: F28D 9/00, F28D 20/00

(54) **WÄRMEAUSTAUSCHER**
HEAT EXCHANGER
ÉCHANGEUR DE CHALEUR

(30) Priorität: 20.09.2019 DE 202019105225 U
(43) Veröffentlichungstag der Anmeldung: 24.03.2021
(73) Patentinhaber: AKG Verwaltungsgesellschaft mbH, 34369 Hogeismar (DE)
(72) Erfinder: STREHLOW, Andreas, 34369 Hofgeismar (DE)
(74) Vertreter: Dantz, Jan Henning

(56) Entgegenhaltungen:
- EP-A1- 3 330 655
- WO-A1-2010/133571
- DE-A1- 4 439 368
- US-A1- 2009 236 071

## Beschreibung

Die vorliegende Erfindung betrifft einen in Blockbauweise mit einer Vielzahl von übereinander gestapelten Schichten bzw. Kanälen aufgebauten Wärmeaustauscher mit einem Latentwärmespeicher gemäß dem Oberbegriff des Anspruchs 1. Solch ein Wärmetauscher ist aus EP 3330655 bekannt.

Latentwärmespeicher dienen in der Regel der Zwischenspeicherung von Wärme oder Kälte und werden industriell beispielsweise zur Optimierung des Betriebes von Kälteanlagen eingesetzt. Als Speichermedium haben sogenannte Phasenwechselmaterialien, beispielsweise Paraffine, im Weiteren auch als PCM (Phase Change Material) bezeichnet, weite Verbreitung.

Im Gegensatz zum Einsatz von Wasser als Phasenwechselmaterial hat Paraffin den Vorteil, dass sich das Volumen des Paraffins beim Phasenübergang vom flüssigen in den festen Zustand verringert und dadurch ein Zerstören eines das Phasenwechselmaterial aufnehmenden Behälters nicht zu befürchten ist. Die für den jeweiligen Anwendungsfall benötigte Erstarrungstemperatur kann durch die Auswahl der Paraffinmischung angepasst werden.

Bekannte Latentwärmespeicher, beispielsweise bekannt aus der EP 3 330 655 A1 oder der DE 44 39 368 A1, bestehen oftmals aus einem mit PCM gefüllten Behälter, in den Kälte oder Wärme ein- und ausgespeichert wird. Der Behälter enthält dazu oftmals einen Wärmeüberträger, der im einfachsten Fall aus einer Rohrleitung oder aus einem leistungsfähigen Wärmeüberträger besteht, durch den die Wärme/Kälte über ein flüssiges Medium eingespeichert oder entnommen wird.

Problematisch beim Einsatz von Paraffinen als Phasenwechselmaterial ist deren geringe Wärmeleitfähigkeit und die damit verbundene schlechte Wärmeübertragung. Diese Wärmeübertragung kann insbesondere im festen Zustand des PCM auch nicht durch Konvektion gesteigert werden.

Zur Steigerung der Wärmeleitfähigkeit im Latentwärmespeicher ist es beispielsweise aus der US2009/0236071 A1 bekannt, in diesen eine wärmeleitfähige, bevorzugt metallische Wärmeleitstruktur aufzunehmen, die von dem Phasenwechselmaterial umgeben ist.

Dies ermöglicht dadurch eine bessere Temperierung eines Prozessmediums, dass durch die in den Latentwärmespeicher integrierte Wärmeleitstruktur eine schnelle Be- und Entladung des Latentwärmespeichers gewährleistet ist.

So nimmt der Latentwärmespeicher aufgrund der schlechteren Wärmeleitfähigkeit des Phasenwechselmaterials im Normalbetrieb des Wärmeaustauschers nur dann nennenswerte Mengen von Wärme oder Kälte auf, wenn sich die Wärmeströme von Prozessmedium und dem Temperiermedium nicht im Gleichgewicht befinden.

Bei zu hoher Leistung des Aggregats zur Temperierung und Volumenstromsteuerung des Temperiermediums, beispielsweise in Gestalt eines ein Kältemedium kühlendes Kälteaggregats, wird in diesem Fall Kälte im Phasenwechselmaterial eingespeichert.

Bei zu geringer Temperierleistung, im oben genannten Beispiel bei zu geringer Kälteleistung, wird das Prozessmedium zusätzlich mit der im Latentwärmespeicher gespeicherten Kälte gekühlt.

Aus der US 5007478 A oder der US 4911232 A sind PCMs bekannt, die aus Suspensionen mit eingekapselten PCM-Partikeln, sogenannten PCM-Slurries (PCS) bestehen. Derartige Suspensionen haben den Vorteil, dass die einzuspeichernde Wärme bzw. Kälte durch freie oder erzwungene Konvektion besser im Speicherbehälter verteilt werden kann.

Aufgabe der vorliegenden Erfindung ist es, einen Wärmeaustauscher der gattungsgemäßen Art dahingehend weiterzuentwickeln, dass auch bei variierender Leistung eines Aggregats, welches den Volumenstrom und die Temperatur des Temperiermediums steuert, eine dauerhaft gute Temperierung des Prozessmediums ermöglicht ist.

Diese Aufgabe wird durch einen Wärmeaustauscher mit den Merkmalen des Anspruchs 1 gelöst.

Der erfindungsgemäße Wärmeaustauscher weist wenigstens einen Prozesskanal zur Durchströmung eines Prozessmediums auf sowie wenigstens einen der Temperierung des Prozessmediums dienenden Temperiermediumskanal zur Durchströmung eines Temperiermediums. Der Wärmeaustauscher weist des Weiteren wenigstens zwei mit einem Phasenwechselmaterial gefüllten Latentwärmespeicher auf. Jeder der Latentwärmespeicher weist dabei eine wärmeleitfähige, bevorzugt metallische Wärmeleitstruktur auf, die von dem Phasenwechselmaterial umgeben ist.

Zur Steigerung der Speicherkapazität des Wärmeaustauschers sind dem wenigstens einen Prozesskanal ein Temperiermediumskanal und wenigstens zwei übereinander gestapelte Latentwärmespeicher zugeordnet.

Wenigstens zwei Latentwärmespeicher sind aneinander liegend und durch ein Trennelement zumindest teilweise beabstandet voneinander angeordnet. Die thermische Durchlässigkeit des Trennelements ist dabei variabel einstellbar.

Hier kann aufgrund der verbesserten Wärmeleitung durch die Wärmeleitstrukturen der Latentwärmespeicher beispielsweise zwischen jede der Fluidpassagen ein Latentwärmespeicher eingefügt werden, so dass die Wärmeübertragung stets durch die Latentwärmespeicher erfolgt.

Die Anordnung aneinander liegender Latentwärmespeicher eignet sich insbesondere für Prozesse mit längeren Speicherzyklen.

Durch das Trennelement wird ein vorzeitiges Entladen der Latentwärmespeicher wirksam verhindert.

Vorteilhafte Ausführungsvarianten der Erfindung sind Gegenstand der Unteransprüche.

Gemäß einer vorteilhaften Ausführungsvariante ist die Wärmeleitstruktur als eine oder mehrere Rippen, insbesondere in Gestalt von Wellrippen ausgebildet.

Solche Wellrippen weisen eine hinreichend große Anlagefläche zur Wärmeübertragung von dem Latentwärmespeicher in einen darüber oder darunter angeordneten benachbarten Temperiermediumskanal oder Prozessmediumskanal auf.

Gemäß einer alternativen Ausführungsvariante ist die Wärmeleitstruktur als metallischer Schaum ausgebildet.

Gemäß einer bevorzugten Ausführungsvariante des erfindungsgemäßen Wärmeaustauschers weist der Wärmeaustauscher wenigstens zwei voneinander beabstandete Prozesskanäle auf, zwischen denen ein Temperiermediumskanal und wenigstens zwei Latentwärmespeicher angeordnet sind.

Der wenigstens eine Prozesskanal, der wenigstens eine Temperiermediumskanal und die Latentwärmespeicher sind bevorzugt derart übereinander gestapelt angeordnet, dass die Wärmeübertragung zwischen dem wenigstens einen Prozesskanal und dem wenigstens einen Temperiermediumskanal stets durch Latentwärmespeicher hindurch erfolgt.

Gemäß einer Ausführungsvariante ist das Trennelement dabei mit wenigstens einer Unterbrechung versehen.

Denkbar ist auch, das Trennelement als Trennrahmen auszubilden, so dass zwischen einander benachbarten Latentwärmespeichern ein deutlich reduzierter Wärmetransport ermöglicht ist.

Gemäß einer alternativen Ausführungsvariante ist das Trennelement als Trennwand ausgebildet.

Die Wellrippen in den jeweiligen Latentwärmespeichern sind dabei gemäß einer bevorzugten Variante nicht an die Trennwand angelötet, sondern lediglich aufgelegt, um dadurch die Kontaktierung für die Wärmeleitung zu reduzieren.

Gemäß einer alternativen Ausführungsvariante ist es auch denkbar, eine solche Trennwand asymmetrisch zwischen den benachbarten Latentwärmespeichern anzuordnen, insbesondere um für eines der Temperaturniveaus einen größeren Teil der gespeicherten Wärme (oder Kälte) der Latentwärmespeicher zur Verfügung zu stellen.

Zur variablen Einstellbarkeit der thermischen Durchlässigkeit des Trennelements ist das Trennelement besonders bevorzugt als Doppelwand mit hydraulisch oder pneumatisch vergrößerbarer Trennfuge ausgebildet.

Gemäß einer alternativen Ausführungsvariante ist das das Trennelement als relativ zueinander verschiebbare Doppelwand ausgebildet.

Dadurch lässt sich in einfacher Weise die thermische Leitfähigkeit einer solchen Doppelwand mechanisch regeln.

Nachfolgend werden Ausführungsbeispiele der Erfindung anhand der beiliegenden Zeichnungen näher erläutert.

Es zeigen:
- Figur 1: eine isometrische schematische Darstellung eines Ausschnitts eines Wärmeaustauschers gemäß dem Stand der Technik,
- Figur 2: eine isometrische Darstellung einer ersten Ausführungsvariante eines Wärmeaustauschers mit Latentwärmespeicherschichten zwischen den jeweiligen Fluidkanälen,
- Figuren 3 und 4: alternative Ausführungsvarianten eines Wärmeaustauschers mit direkt benachbarten Latentwärmespeichern,
- Figur 5: eine weitere schematische isometrische Ansicht einer Ausführungsvariante eines Wärmeaustauschers mit zwischen benachbart angeordneten Latentwärmespeicherschichten angeordnetem Trennelement mit Durchbrüchen und
- Figuren 6a, 6b: isometrische Darstellungen einer Ausführungsvariante eines erfindungsgemäßen Wärmeaustauschers mit zwischen benachbart angeordneten Latentwärmespeicherschichten angeordneter als Doppelwand ausgebildetem Trennelement.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Wärmeaustauschers, des Prozesskanals, des Temperiermediumskanals, des Latentwärmespeichers, der Wärmeleitstruktur und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

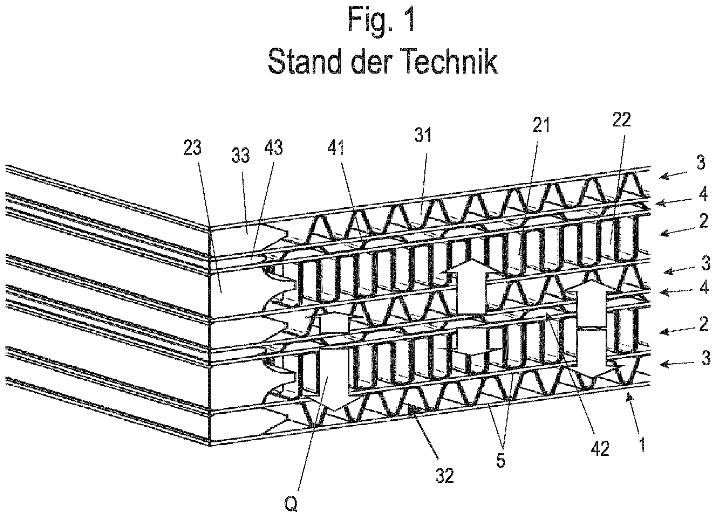

Figur 1 zeigt einen aus dem Stand der Technik bekannten Wärmaustauscher 1. Der Wärmeaustauscher ist in Blockbauweise aufgebaut, mit einer Vielzahl von übereinander gestapelten Schichten bzw. Kanälen, die insgesamt zu einem Block miteinander verlötet sind.

Wie Figur 1 weiter zeigt, sind bei einem solchen Wärmaustauscher 1 die Schichten bzw. Kanäle in einer Abfolge derart übereinander angeordnet, dass ein Prozesskanal 3 über einem Temperiermediumskanal 4 und dieser über einem Latentwärmespeicher 2 ist. Unterhalb des Latentwärmespeichers 2 wiederholt sich dann die oben beschriebene Abfolge von Schichten bzw. Kanälen.

Die Prozesskanäle 3 dienen zur Durchströmung eines Prozessmediums 32, beispielsweise in Gestalt von zu kühlender Druckluft.

Denkbar sind jedoch auch andere flüssige oder gasförmige Prozessmedien.

Der Temperiermediumskanal 4 zur Durchströmung eines Temperiermediums 42 dient der Temperierung des Prozessmediums 32, sprich der Übertragung einer Wärmemenge Q, wie durch die breiten Pfeile in Figur 1 dargestellt ist. Ein solches Temperiermedium 42 kann beispielsweise ein flüssiges Kältemittel sein.

Wie in Figur 1 des Weiteren dargestellt ist, weist der Latentwärmespeicher 2 eine wärmeleitfähige, bevorzugt metallische Wärmeleitstruktur 21 auf, die von dem Phasenwechselmaterial 22 umgeben ist.

Bei den in den Figuren gezeigten Ausführungsbeispielen ist die Wärmeleitstruktur 21 in Form von Wellrippen ausgebildet, mit im Querschnitt rechteckförmigem Wellenverlauf. Zwischen den Kanälen 3, 4 und dem Latentwärmespeicher 2 sind jeweils Trennbleche 5 angeordnet. Weiter sind der oder die Prozesskanäle 3, die Temperiermediumskanäle 4 und der Latentwärmespeicher 2 seitlich durch Längsprofile 23, 33, 43 verschlossen und bevorzugt miteinander verlötet.

Durch die Anordnung der hier als Wellrippen ausgebildeten Wärmeleitstruktur 21 ist eine thermisch gut leitende Verbindung zwischen dem Temperiermediumskanal 4 und dem unterhalb des Latentwärmespeichers 2 angeordneten Prozesskanal 3 auch durch den Latentwärmespeicher 2 hindurch gegeben.

Dies ermöglicht beispielsweise im Falle von zu kühlender Druckluft als Prozessmedium 32 und einem Kühlmittel als Temperiermedium 42, dass im Normalbetrieb das durch den Prozesskanal 3 durchgeleitete Prozessmedium 32 Wärme sowohl an das direkt unterhalb des Prozesskanals 3 durch den Temperiermediumskanal 4 durchströmende Temperiermedium 42 abgeben kann als auch durch den Latentwärmespeicher 2 hindurch an das Temperiermedium 42, das den Temperiermediumskanal 4 durchströmt, der unmittelbar oberhalb des Latentwärmespeichers 2 angeordnet ist.

Aufgrund der geringeren Wärmeleitfähigkeit des Phasenwechselmaterials 22 nimmt dieses nur dann nennenswerte Menge von Wärme oder Kälte auf, wenn sich die Wärmeströme von Temperiermedium 42 und Prozessmedium 32 nicht im Gleichgewicht befinden.

So wird beispielsweise bei zu hoher Leistung eines Kältemittelaggregats, das der Temperierung und Regelung der Durchströmmenge des Temperiermediums 42 dient, zu groß, wird dementsprechend Kälte im Phasenwechselmaterial 22 eingespeichert.

Bei zu geringer Kälteleistung hingegen liefert die im Phasenwechselmaterial 22 eingespeicherte Kälte einen entsprechenden Beitrag zur Kühlung des Prozessmediums 32, beispielsweise in Gestalt von Druckluft.

Neben der hier gezeigten Ausführungsvariante der Wärmeleitstruktur 21 als Wellrippe ist es auch denkbar, eine solche Wärmeleitstruktur in anderer Formgestalt auszubilden, beispielsweise als metallischer Schaum.

Ein solches Phasenwechselmaterial 22 dient der Speicherung großer Wärmemengen unter Ausnutzung der Enthalpie thermodynamischer Zustandsänderungen des Phasenwechselmaterials 22. Am häufigsten benutzt wird dabei die Ausnutzung des Phasenübergangs fest - flüssig, wie es beispielsweise beim Einsatz von Paraffinen als Phasenwechselmaterial der Fall ist.

Denkbar ist aber auch der Einsatz anderer Materialien wie beispielsweise spezielle Salze oder dergleichen.

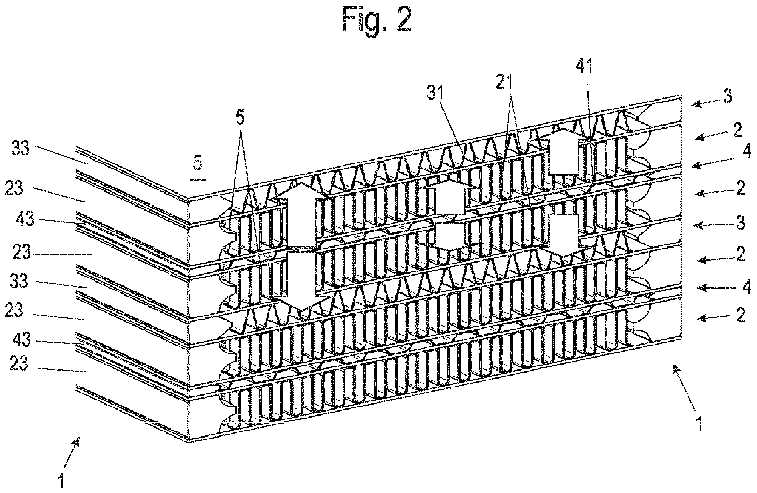

Zur weiteren Steigerung der Speicherkapazität des Wärmeaustauschers 1 sind bei den in den Figuren 2 bis 6 dargestellten Ausführungsvarianten weitere Latentwärmespeicher 2 in den Block des Wärmeaustauschers 1 eingefügt.

Auch dieser Wärmeaustauscher ist in Blockbauweise aufgebaut, mit einer Vielzahl von jeweils eine Ebene des Wärmeaustauschers bildenden, übereinander gestapelten Schichten bzw. Kanälen, die insgesamt zu einem Block miteinander verlötet sind.

Jeder der Temperiermediumskanäle 4, Prozesskanäle 3 und Latentwärmespeicher 2 bildet dabei eine separate Ebene des in Blockbauweise aufgebauten Wärmeaustauschers.

Dabei sind erfindungsgemäß zwischen zwei Prozesskanälen 3 ein Temperiermediumskanal 4 und wenigstens zwei übereinander gestapelte Latentwärmespeicher 2 angeordnet.

Übereinander gestapelt bedeutet hier, dass jeder Latentwärmespeicher 2, Prozesskanal 3 und Temperiermediumskanal 4 eine separate Ebene des in Blockbauweise aufgebauten Wärmeaustauschers bildet.

Im Falle eines Wärmeaustauschers mit nur einem einzigen Prozesskanal 3 sind in einer Richtung senkrecht zu den Ebenen der Schichten bzw. Kanäle ein Temperiermediumskanal 4 und wenigstens zwei Latentwärmespeicher 2 vorgesehen.

Bei der in Figur 2 gezeigten Ausführungsvariante ist (bis auf die oberste Schicht) jeder der Prozesskanäle 3 und Temperiermediumskanäle 4 zwischen zwei jeweiligen Latentwärmespeichern 2 aufgenommen.

Dies ermöglicht, dass die Wärmeübertragung zwischen Prozessmedium 32 und Temperiermedium 42 jeweils durch einen Latentwärmespeicher 2 hindurch erfolgt, wie es durch die breiten Pfeile links in Figur 2 dargestellt ist.

Die weiteren breiten Pfeile zeigen die Wärmeübertragung vom Temperiermedium 42 in den Latentwärmespeicher 2 (mittlere Pfeile) bzw. die Wärmeübertragung vom Latentwärmespeicher 2 in das Prozessmedium 32 (rechte Pfeile).

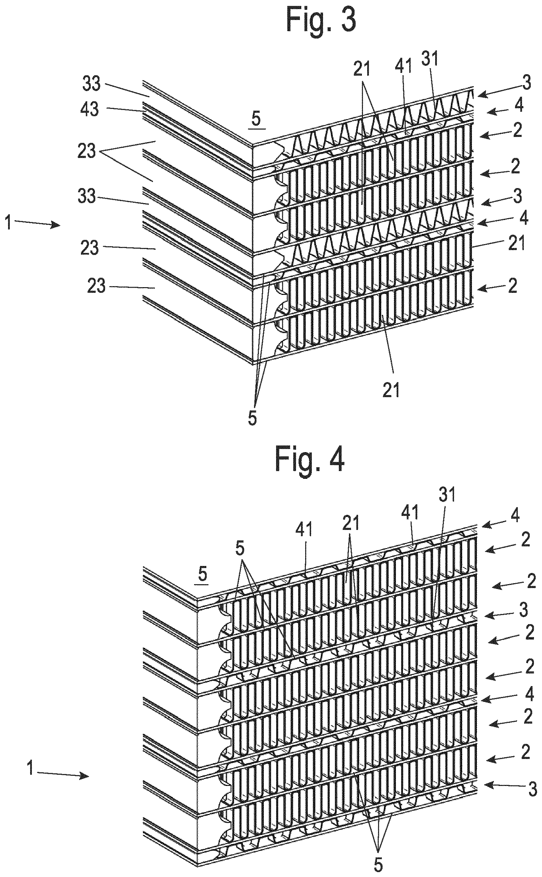

Zur nochmals weiteren Erhöhung der Speicherkapazität des Wärmeaustauschers 1 sind bei den in den Figuren 3 und 4 gezeigten Ausführungsvarianten die Latentwärmespeicher 2 vergrößert ausgebildet. Die Vergrößerung der Latentwärmespeicher 2 erfolgt hier durch Anordnung mehrerer Latentwärmespeicherschichten übereinander.

Denkbar wäre auch, die Höhe des jeweiligen Latentwärmespeichers 2 zu vergrößern.

Bei der in Figur 3 gezeigten Ausführungsvariante sind ein Prozesskanal 3 und ein Temperiermediumskanal 4 unmittelbar aneinander liegend angeordnet. Zwischen den Temperiermediumskanal 4 und dem nächsten darunter angeordneten Prozesskanal 3 sind in dieser Ausführungsvariante zwei Latentwärmespeicher 2 platziert.

Bei der in Figur 4 gezeigten Ausführungsvariante hingegen sind Prozesskanal 3 und Temperiermediumskanal 4 stets durch zwei Latentwärmespeicher 2 voneinander getrennt angeordnet.

Bei Prozessen mit längeren Speicherzyklen ist es darüber hinaus vorteilhaft, die Fluidpassagen, also Prozesskanal 3 und Temperiermediumskanal 4 nicht überall durch den Latentwärmespeicher 2 hindurch thermisch zu verbinden, beispielsweise, um ein vorzeitiges Entladen der Latentwärmespeicher 2 zu verhindern.

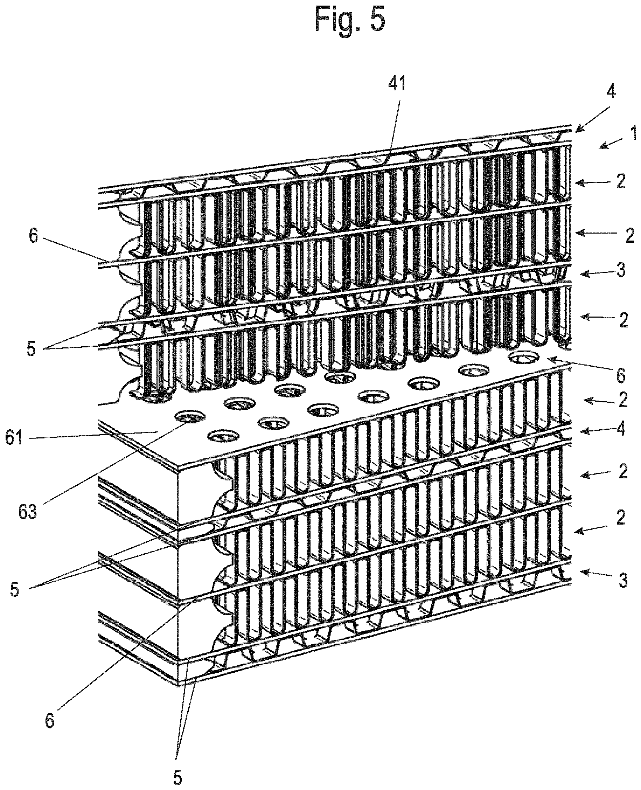

Dazu sind gemäß einer in Figur 5 gezeigten bevorzugten Ausführungsvariante zwei aneinander liegende Latentwärmespeicher 2 durch ein Trennelement 6 zumindest teilweise beabstandet voneinander angeordnet.

Dieses Trennelement 6 ist, wie in Figur 5 dargestellt, mit einer Vielzahl von Unterbrechungen 63, hier in Gestalt von Rundlöchern ausgebildet.

Denkbar ist auch, das Trennelement 6 als Trennrahmen auszubilden, der nur im Bereich der Außenränder der Latentwärmespeicher 2 die beiden Latentwärmespeicher 2 miteinander verbindet.

Denkbar ist auch die Ausbildung des Trennelements 6 als Trennblech 5, wie es auch zur Ausbildung der Prozesskanäle 3 und Temperiermediumskanäle 4 eingesetzt wird, wobei in diesem Fall die als Wellrippen ausgebildeten Wärmeleitstrukturen 21 nicht an die Oberflächen 61 des Trennelements 6 angelötet werden, wodurch die Querschnittsfläche bzw. Kontaktierung für die Wärmeleitung reduziert wird.

Erfindungsgemäss ist die thermische Durchlässigkeit des Trennelements 6 variabel einstellbar.

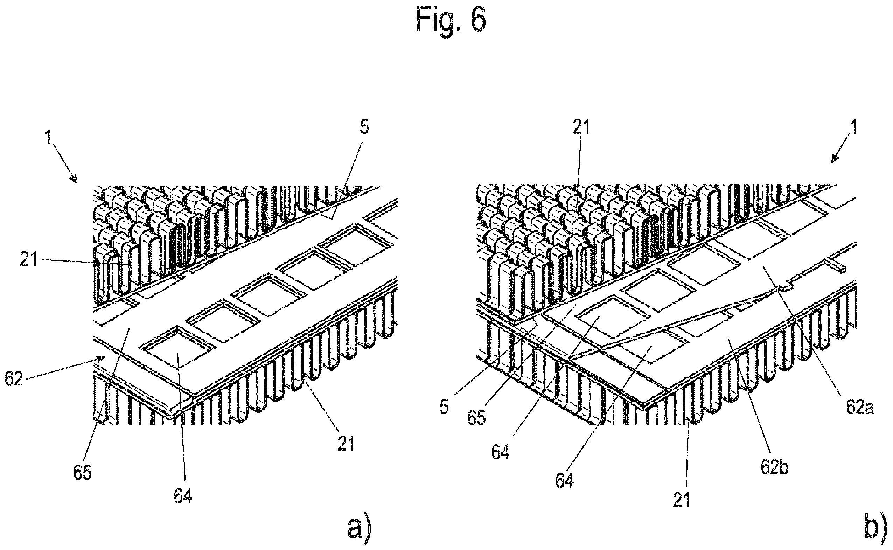

Dazu ist, wie beispielhaft in Figur 6 dargestellt ist, das Trennelement 6 als Doppelwand 62 mit relativ zueinander verschiebbaren Wänden 62a, 62b ausgebildet. In den Oberflächen der ersten Wand 62a und zweiten Wand 62b dieser Doppelwand 62 sind mehrere Reihen von Einprägungen 64 eingebracht, die von ebenen Zwischenräumen 65 voneinander begrenzt werden.

So ist es möglich, durch Verschieben der ersten Wand 62a relativ zur zweiten Wand 62b die Wände 62a, 62b so anzuordnen, dass die Einprägungen 64 der beiden Wände 62a, 62b ineinander liegen, was zu einer hohen Wärmeleitfähigkeit der Doppelwand 62 führt.

Wird die erste Wand 62a relativ zur zweiten Wand 62b jedoch so verschoben, dass die Einprägungen 64 der oberen, ersten Wand 62a auf dem Zwischenraum 65 der unteren, zweiten Wand 62b aufliegt, sorgt dies für eine nur teilflächige Auflage der beiden Wände 62a, 62b, was eine Herabsetzung der Wärmeleitfähigkeit der Doppelwand 62 bewirkt.

Denkbar ist auch, das Trennelement 6 als Doppelwand 62 mit hydraulisch oder pneumatisch vergrößerbarer Trennfuge auszubilden, um die Wärmeleitfähigkeit dieser Doppelwand 62 variieren zu können.

### Bezugszeichenliste

- 1: Wärmeaustauscher

- 2: Latentwärmespeicher
- 21: Wärmeleitstruktur
- 22: Phasenwechselmaterial
- 23: Längsprofil

- 3: Prozesskanal
- 31: Lamelle
- 32: Prozessmedium
- 33: Längsprofil

- 4: Temperiermediumskanal
- 41: Lamelle
- 42: Temperiermedium
- 43: Längsprofil

- 5: Trennblech

- 6: Trennelement
- 61: Trennfläche
- 62: Doppelwand
- 62a: erste Wand
- 62b: zweite Wand
- 63: Unterbrechung
- 64: Einprägung
- 65: Zwischenraum

## Patentansprüche

1. In Blockbauweise mit einer Vielzahl von übereinander gestapelten Schichten bzw. Kanälen aufgebauter Wärmeaustauscher (1), aufweisend
- wenigstens einen Prozesskanal (3) zur Durchströmung eines Prozessmediums (32),
- wenigstens einen der Temperierung des Prozessmediums (32) dienenden Temperiermediumskanal (4) zur Durchströmung eines Temperiermediums (42),
- wenigstens zwei mit einem Phasenwechselmaterial (22) gefüllte Latentwärmespeicher (2),
- wobei dem wenigstens einen Prozesskanal (3) ein Temperiermediumskanal (4) und wenigstens zwei übereinander gestapelte Latentwärmespeicher (2) zugeordnet sind,
wobei
- wenigstens zwei Latentwärmespeicher (2) aneinander liegend angeordnet sind,
- wobei aneinander liegende Latentwärmespeicher (2) durch ein Trennelement (6) zumindest teilweise beabstandet voneinander angeordnet sind,
**dadurch gekennzeichnet, dass** jeder der Latentwärmespeicher (2) eine wärmeleitfähige, bevorzugt metallische Wärmeleitstruktur (21) aufweist die von dem Phasenwechselmaterial (22) umgeben ist, und dass die thermische Durchlässigkeit des Trennelements (6) variabel einstellbar ist.

2. Wärmeaustauscher (1) nach Anspruch 1, **dadurch gekennzeichnet, dass** die Wärmeleitstruktur (21) als eine oder mehrere Rippen, insbesondere Wellrippen ausgebildet ist.

3. Wärmeaustauscher (1) nach Anspruch 1, **dadurch gekennzeichnet, dass** die Wärmeleitstruktur als metallischer Schaum ausgebildet ist.

4. Wärmeaustauscher (1) nach einem der vorhergehenden Ansprüche, **dadurch gekennzeichnet, dass** der Wärmeaustauscher (1) wenigstens zwei voneinander beabstandete Prozesskanäle (3) aufweist, zwischen denen ein Temperiermediumskanal (4) und wenigstens zwei übereinander gestapelte Latentwärmespeicher (2) angeordnet sind.

5. Wärmeaustauscher (1) nach einem der vorhergehenden Ansprüche, **dadurch gekennzeichnet, dass** der wenigstens einen Prozesskanal (3), der wenigstens einen Temperiermediumskanal (4) und die Latentwärmespeicher (2) derart übereinander gestapelt angeordnet sind, dass die Wärmeübertragung zwischen dem wenigstens einen Prozesskanal (3) und dem wenigstens einen Temperiermediumskanal (4) stets durch Latentwärmespeicher (2) hindurch erfolgt.

6. Wärmeaustauscher (1) nach einem der vorhergehenden Ansprüche, **dadurch gekennzeichnet, dass** das Trennelement (6) mit wenigstens einer Unterbrechung (63) versehen ist.

7. Wärmeaustauscher (1) nach Anspruch 6, **dadurch gekennzeichnet, dass** das Trennelement (6) als Trennrahmen ausgebildet ist.

8. Wärmeaustauscher (1) nach Anspruch 6, **dadurch gekennzeichnet, dass** das Trennelement (6) als Trennwand ausgebildet ist.

9. Wärmeaustauscher (1) nach einem der vorhergehenden Ansprüche, **dadurch gekennzeichnet, dass** das Trennelement (6) als Doppelwand (62) mit hydraulisch oder pneumatisch vergrößerbarer Trennfuge ausgebildet ist.

10. Wärmeaustauscher (1) einem der vorhergehenden Ansprüche 1 bis 8, **dadurch gekennzeichnet, dass** das Trennelement (6) als relativ zueinander verschiebbare Doppelwand (62) ausgebildet ist.

## Claims

1. Heat exchanger (1) of block construction having a plurality of layers or channels stacked on top of each other, comprising
- at least one process channel (3) for the through-flow of a process medium (32),
- at least one temperature-control medium channel (4) for the through-flow of a temperature-control medium (42) and serving to control the temperature of the process medium (32),
- at least two latent heat accumulators (2) filled with a phase-change material (22),
- wherein a tempering medium channel (4) and at least two latent heat accumulators (2) stacked on top of each other are associated with the at least one process channel (3), wherein
- at least two latent heat accumulators (2) are arranged adjacent to one another,
- wherein adjacently disposed latent heat accumulators (2) are arranged at least partially spaced apart from one another by a separating element (6),
**characterized in that** each of the latent heat accumulators (2) comprises a thermally conductive, preferably metallic, heat-conducting structure (21) which is surrounded by the phase-change material (22), and **in that** the thermal permeability of the separating element (6) can be variably adjusted.

2. Heat exchanger (1) according to claim 1, **characterized in that** the heat-conducting structure (21) is designed as one or more fins, in particular corrugated fins.

3. Heat exchanger (1) according to claim 1, **characterized in that** the heat-conducting structure is designed as a metallic foam.

4. Heat exchanger (1) according to one of the preceding claims, **characterized in that** the heat exchanger (1) comprises at least two process channels (3) spaced apart from one another, between which a temperature-control medium channel (4) and at least two latent heat accumulators (2) stacked on top of each other are arranged.

5. Heat exchanger (1) according to one of the preceding claims, **characterized in that** the at least one process channel (3), the at least one tempering-medium channel (4) and the latent heat accumulators (2) are arranged stacked on top of each other in such a way that the heat transfer between the at least one process channel (3) and the at least one tempering medium channel (4) always takes place through latent heat accumulators (2).

6. Heat exchanger (1) according to one of the preceding claims, **characterized in that** the separating element (6) is provided with at least one interruption (63).

7. Heat exchanger (1) according to claim 6, **characterized in that** the separating element (6) is designed as a separating frame.

8. Heat exchanger (1) according to claim 6, **characterized in that** the separating element (6) is designed as a partition wall.

9. Heat exchanger (1) according to one of the preceding claims, **characterized in that** the separating element (6) is designed as a double wall (62) with a hydraulically or pneumatically enlargeable parting line.

10. Heat exchanger (1) according to one of the preceding claims 1 to 8, **characterized in that** the separating element (6) is designed as a double wall (62) which can be displaced relative to one another.

## Revendications

1. Échangeur de chaleur (1) à blocs avec un grand nombre de couches ou de canaux superposés, comprenant
- au moins un conduit de process (3) pour la circulation d'un fluide de process (32),
- au moins un conduit de mise à température (4) pour le passage d'un fluide de mise à température (42), servant à mettre à température le fluide de process (32),
- au moins deux accumulateurs de chaleur latente (2) remplis d'un matériau à changement de phase (22),
- dans lequel l'au moins un conduit de process (3) est associé à un conduit de fluide de mise à température (4) et à au moins deux accumulateurs de chaleur latente (2) superposés,
dans lequel
- au moins deux accumulateurs de chaleur latente (2) sont posés horizontalement l'un sur l'autre,
- les accumulateurs de chaleur latente (2) posés l'un sur l'autre sont au moins en partie écartés l'un de l'autre par un élément séparateur (6),
**caractérisé en ce que** chacun des accumulateurs de chaleur latente (2) présente une structure conductrice thermique (21) conduisant la chaleur, de préférence métallique, qui est environnée par le matériau à changement de phase (22), et **en ce que** la transmissivité thermique de l'élément séparateur (6) peut être ajustée de façon variable.

2. Échangeur de chaleur (1) selon la revendication 1, **caractérisé en ce que** la structure conductrice thermique (21) est conçue comme une ou plusieurs ailettes, en particulier des ailettes ondulées.

3. Échangeur de chaleur (1) selon la revendication 1, **caractérisé en ce que** la structure conductrice thermique est conformée comme une mousse métallique.

4. Échangeur de chaleur (1) selon l'une des revendications précédentes, **caractérisé en ce que** l'échangeur de chaleur (1) présente au moins deux conduits de process (3) écartés l'un de l'autre, entre lesquels sont disposés un conduit de fluide de mise à température (4) et au moins deux accumulateurs de chaleur latente (2) empilés l'un sur l'autre.

5. Échangeur de chaleur (1) selon l'une des revendications précédentes, **caractérisé en ce que** l'au moins un conduit de process (3), l'au moins un conduit de fluide de mise à température (4) et les accumulateurs de chaleur latente (2) sont empilés les uns sur les autres de telle manière que la transmission de la chaleur entre l'au moins un conduit de process (3) et l'au moins un conduit de fluide de mise à température (4) passe toujours par les accumulateurs de chaleur latente (2).

6. Échangeur de chaleur (1) selon l'une des revendications précédentes, **caractérisé en ce que** l'élément séparateur (6) est muni d'au moins une solution de continuité (63).

7. Échangeur de chaleur (1) selon la revendication 6, **caractérisé en ce que** l'élément séparateur (6) est conçu comme un cadre de séparation.

8. Échangeur de chaleur (1) selon la revendication 6, **caractérisé en ce que** l'élément séparateur (6) est conçu comme une cloison de séparation.

9. Échangeur de chaleur (1) selon l'une des revendications précédentes, **caractérisé en ce que** l'élément séparateur (6) est conçu comme une double paroi (62) avec un joint de dilatation qui peut être élargi par un moyen hydraulique ou pneumatique.

10. Échangeur de chaleur (1) selon l'une des revendications 1 à 8, **caractérisé en ce que** l'élément séparateur (6) est conformé comme une double paroi (62) pouvant coulisser l'une rapport à l'autre.
